# EUROPÄISCHE PATENTSCHRIFT

(11) **EP 3 538 996 B1**
(45) Veröffentlichungstag und Bekanntmachung des Hinweises auf die Patenterteilung: **26.01.2022**
(21) Anmeldenummer: 17794354.5
(22) Anmeldetag: 10.11.2017
(51) Int. Cl.: G06F 9/54

(54) **AUSTAUSCH VON ECHTZEITDATEN ZWISCHEN PROGRAMMMODULEN**
INTERCHANGING REAL-TIME DATA BETWEEN PROGRAM MODULES
ÉCHANGE DE DONNÉES EN TEMPS RÉEL ENTRE DES MODULES DE PROGRAMME

(30) Priorität: 10.11.2016 LU 93300
(43) Veröffentlichungstag der Anmeldung: 18.09.2019
(60) Teilanmeldung: 21215738.2
(73) Patentinhaber: Phoenix Contact GmbH & Co. KG, 32825 Blomberg (DE)
(72) Erfinder: HEUTGER, Henning, 31812 Bad Pyrmont (DE); KLEINOW, Rolf, 33619 Bielefeld (DE); DREWES, Tobias, 33039 Nieheim (DE); BECK, Alexander, 86492 Egling an der Paar (DE); FRIEBEN, Jens, 33106 Paderborn (DE)
(74) Vertreter: Blumbach · Zinngrebe Patentanwälte PartG mbB
(86) Internationale Anmeldenummer: PCT/EP2017/078924
(87) Internationale Veröffentlichungsnummer: WO 2018/087308

(56) Entgegenhaltungen:
- EP-A1- 2 456 124
- CH-A2- 709 007
- GB-A- 2 415 806

## Beschreibung

Die vorliegende Erfindung liegt auf dem Gebiet der Automatisierungstechnik und betrifft ein Verfahren zum Austausch von Echtzeitdaten zwischen Programmmodulen. Ferner betrifft die vorliegende Erfindung eine Datenspeichereinrichtung, eine Vorrichtung zum Datenaustausch zwischen Programmmodulen, ein Echtzeitbetriebssystem und ein Computerprogrammprodukt.

Durch aktuelle Thematiken, wie beispielsweise Industrie 4.0, dem Internet der Dinge oder Agenda CPS des VDI, wird aufgezeigt, dass sich in Zukunft automatisierte Anlagen durch einen hohen Teil von Vernetzung und Software auszeichnen werden. Dabei wird es einen Wechsel von der klassischen IEC 61131-3 Programmierung hin zu modernen Hochsprachen geben. Bis zum Jahr 2018 soll der verwendete Code rund 70% außerhalb der nach IEC definierten Sprachen liegen. Dabei werden die bestehenden Anforderungen, wie zum Beispiel Echtzeitfähigkeit und Konsistenz, um höhere Flexibilität, mehr Sicherheit und bessere Wartbarkeit ergänzt.

Bei der Vernetzung von Sensoren nimmt die Echtzeitfähigkeit des Gesamtsystems eine bedeutende Rolle ein. Dies ist insbesondere in einer industriellen Umgebung mit zeitkritischen Abläufen von Bedeutung. Daher ist es notwendig, alle Systemkomponenten einer Automatisierungsanlage in ihrer Echtzeitfähigkeit zu verbessern. Hierbei werden durch die zukünftigen Entwicklungen die Speichereinrichtungen und die darauf zugreifenden Programmmodule besonders im Vordergrund stehen, da tendenziell eine anwachsende Anzahl an Daten gespeichert und verarbeitet werden müssen.

Aus GB 2 415 806 A ist eine dynamische Softwareintegrations-Architektur mit Programmmodulen zur Integration verteilter Komponenten oder Systeme mittels dynamischer Integrations-Konnektoren bekannt, wobei Integrationsregelsätze verwendet werden, die Zugriffs- und Kommunikationsregeln einer zugeordneten Softwarekomponente definieren, und mit einer Verhandlungs-Engine, welche basierend auf den Integrationsregelsätzen mit den Integrations-Konnektoren verhandelt, um Daten- und/oder Kontroll-Konnektivität zu definieren.

EP 2 456 124 A1 betrifft das Engineering einer Datenkommunikation insbesondere für Geber in einer industriellen Automatisierungsumgebung und beschreibt ein Verfahren zur Kommunikation zwischen Funktionsmodulen, Aus CH 709 007 A2 ist ferner ein Service Bus zur Verbindung von Klienten mit Diensten von Dienstanbietern in einem Datenverarbeitungssystem bekannt.

Es ist eine Aufgabe der vorliegenden Erfindung, eine Lösung anzugeben, um einen Datenaustausch zwischen Programmmodulen in Echtzeit zu verbessern.

Diese Aufgabe wird erfindungsgemäß durch die Merkmale des Patentanspruchs 1 gelöst. Ferner wird die Aufgabe durch eine Datenspeichereinrichtung gemäß Patentanspruch 12 und eine Vorrichtung zum Datenaustausch zwischen Programmodulen gemäß Patentanspruch 15 gelöst. Weitere Ausgestaltungen ergeben sich aus den Unteransprüchen,

Bei dem erfindungsgemäßen Verfahren zum Austausch von Echtzeitdaten zwischen Programmmodulen wird ein Bereitstellen einer Datenspeichereinrichtung und ein Speichern von Metainformation in der Datenspeichereinrichtung vorgesehen, wobei die Metainformation mindestens eine Variable aufweist. Ferner sieht das Verfahren ein Bereitstellen mindestens einer Beschreibungsdatei und ein Konfigurieren der Datenspeichereinrichtung mit der Beschreibungsdatei vor. Ferner weist das Verfahren ein Bereitstellen mindestens eines Konnektors auf, wobei mit dem Konnektor zwischen Programmmodulen über die Datenspeichereinrichtung eine Verbindung in Abhängigkeit einer Anfrage in der Beschreibungsdatei herstellbar ist und wobei die Programmmodule unter Verwendung gleicher oder unterschiedlicher Programmiersprachen erstellt sind und von einem Echtzeitbetriebssystem ausführbar sind. Ferner weist das Verfahren ein Austauschen von mindestens einer Variablen zwischen einem der Programmmodule und der Datenspeichereinrichtung über den Konnektor auf.

Die Datenspeichereinrichtung umfasst eine Softwarekomponente, ausgebildet als Teil der Firmware einer Steuervorrichtung, wobei die Steuervorrichtung als Steuergerät zur Steuerung eines Automatisierungssystems ausgebildet ist. Beispielsweise kann die Steuervorrichtung zum Einlesen von Sensordaten und zur Steuerung von Aktoren in Abhängigkeit der Sensordaten dienen, wobei zu diesem Zweck auf der Steuervorrichtung mehrere Programmmodule ausgeführt werden.

Die Datenspeichereinrichtung umfasst einen Speicher, über den Programmmodule Daten austauschen können. Eine als Konnektor bezeichnete Funktionalität der Datenspeichereinrichtung stellt eine Verbindung von einem Programmodul zu einem anderen Programmmodul über die Datenspeichereinrichtung bereit. Die Datenspeichereinrichtung kann über den Speicher gerätelokale Daten für den Austausch zwischen den Programmmodulen anbieten und ist von allen Prozessen gleichermaßen nutzbar.

Die Metainformationen werden insbesondere von der Datenspeichereinrichtung eingelesen und können jeweils einem Programmmodul zugeordnet sein, wobei die Metainformationen insbesondere die Identifikation einer in dem Programmodul verwendeten Variablen sowie zusätzliche, dieser Variablen zugeordnete Informationen wie zum Beispiel einen Datentyp umfassen können.

Die Beschreibungsdatei definiert die Konfiguration der Datenspeichereinrichtung, wobei die Beschreibungsdatei beispielsweise die Metainformationen oder Informationen zu einzulesenden Metainformationen, beispielsweise in Form eines Dateipfads, umfassen kann. Ferner kann die Beschreibungsdatei Informationen umfassen, welche zu erstellende Konnektoren definieren.

Die Beschreibungsdatei wird beispielsweise in Form einer Textdatei in einem Speicher einer Steuervorrichtung bereitgestellt und beispielsweise bei Inbetriebnahme bzw. Einschalten der Steuervorrichtung von der Datenspeichereinrichtung als Teil der Firmware der Steuervorrichtung eingelesen.

Ein Eintrag zur Erstellung eines Konnektors in der Beschreibungsdatei kann als Anfrage angesehen werden, einen entsprechenden Konnektor zu erstellen, d.h. die entsprechende Funktionalität in der Datenspeichereinrichtung bereitzustellen. Zu diesem Zweck umfasst die Beschreibungsdatei beispielsweise Informationen, welcher Anschluss oder Port eines Programmmoduls mit welchem Anschluss oder Port eines anderen Programmmoduls verbunden werden soll. Die Anschlüsse oder Ports der Programmmodule werden beispielsweise über APIs bereitgestellt.

Die Beschreibungsdatei kann als Metabeschreibungsdatei aufgefasst werden, mit der jeder Anschluss bzw. Port mit seinem jeweiligen Datentyp und Datenrichtung spezifiziert werden kann.

Die Datenspeichereinrichtung stellt somit einen Speicher bzw. einen globalen Datenraum bereit, in welchem Programmmodule Variablen bzw. Variablenwerte ablegen können, so dass andere Programmmodule auf diese zugreifen können.

Zu diesem Zweck wird über die als Konnektor bezeichnete Funktionalität der Datenspeichereinrichtung zwischen einem der Programmmodule und der Datenspeichereinrichtung mindestens eine Variable bzw. ein Variablenwert ausgetauscht, d.h. ein Programmmodul übermittelt der Datenspeichereinrichtung eine Variable bzw. einen Variablenwert, der im Speicher bzw. globalen Datenraum abgelegt wird, oder ein Programmmodul ruft eine im Speicher bzw. globalen Datenraum abgelegte Variable bzw. einen Variablenwert ab, wobei die Kommunikation über Anschlüsse der jeweiligen Programmmodule erfolgt, die durch einen Konnektor verbunden sind.

In der Automatisierungstechnik ist ein Wandel abzusehen, der von der Verwendung von klassischen SPS Programmiersprachen hin zum Einsatz von Hochsprachen erfolgt. Demzufolge wird erfindungsgemäß ermöglicht, auch bei der Verwendung von Programmmodulen, die in unterschiedlichen Programmiersprachen geschrieben wurden, auf einen gemeinsamen Datenspeicher bzw. eine Datenspeichereinrichtung in Echtzeit zuzugreifen.

Bisher regelt beispielsweise die Norm IEC 61131 die Syntax und die Semantik von Programmiersprachen für programmierbare Controller. Hierbei wird eine vereinheitlichte Suite von Programmiersprachen für programmierbare Controller vorgeschlagen. Diese Suite weist zwei Textsprachen (Instruction List und Structured Text) sowie zwei graphische Sprachen (Ladder Diagram und Function Block Diagram) auf. Ferner werden in der Norm IEC 61131 (Ausgabe 3.0, 2013-02) Merkmale definiert, die die Kommunikation zwischen Programm-Controllern und weiteren Komponenten eines automatisierten Systems vereinfachen sollen.

Es können jedoch auch andere Programmiersprachen erfindungsgemäß verwendet werden, die von den derzeit klassischen Programmiersprachen nach IEC 61131 abgelöst werden bzw. derzeit bereits parallel zu diesen eingesetzt werden. Es können beispielsweise Programmmodule verwendet werden, die jeweils mindestens in einer der Programmiersprachen nach der Norm IEC 61131, in Matlab/Simulink, C++, C# oder JAVA oder Python programmiert ist. Weitere Programmiersprachen sind ebenfalls möglich.

Demnach kann für alle Programmmodule eine einzige Programmiersprache verwendet werden. Auch ist es möglich, dass für zwei oder mehrere Programmmodule unterschiedliche Programmiersprachen verwendet werden.

Die Programmmodule werden beispielsweise mit Hilfe einer Programmierschnittstelle, insbesondere mit einer API (API = application programming interface,) gesteuert. Die Beschreibungsdatei kann beispielsweise als XML-Datei (XML = Extensible Markup Language Datei) bereitgestellt werden.

Die Programmierschnittstelle bzw. das API der Datenspeichereinrichtung ermöglicht einem Anwendungsentwickler, die veröffentlichten Variablen mit ihren Metainformationen zu durchsuchen und Konnektoren zur Laufzeit zu etablieren. Neben einer statischen Verknüpfung über Konnektoren können so auch dynamische Verbindungen über Konnektoren aufgebaut werden. Dies kann für Komponenten erforderlich sein, deren Datenzugriff sich zur Laufzeit verändert, wie zum Beispiel ein OPC-UA Server (OPC-UA = Open Platform Communications Unified Architecture), der das Browsen von Datenpunkten zu jedem Zeitpunkt anbieten kann. Für detaillierte Analysemöglichkeiten und Fehlersuche bietet die Programmierschnittstelle bzw. das API darüber hinaus die Möglichkeit alle aufgebauten Konnektoren aufzulisten.

Die Konfiguration der Datenspeichereinrichtung und ihrer Konnektoren kann durch eine Beschreibungsdatei oder eine Mehrzahl von Beschreibungsdateien erfolgen, beispielsweise in Form einer XML-Datei oder mehrerer XML-Dateien. Diese Beschreibungsdateien erlauben ein Konfigurieren statt ein Programmieren. Damit kann die Funktion einer Anlage zur Laufzeit verändert werden, ohne dass die einzelnen Applikationsteile neu übersetzt werden müssen. Auch erlaubt es dem Benutzer die Verwendung von Beschreibungsdateien bzw. eine XML-basierte Konfiguration, Anpassungen direkt an der Steuerung vorzunehmen oder eigene externe Werkzeuge und Toolchains zu verwenden. Der Aufbau einer Beschreibungsdatei bzw. XML-Datei wird dabei durch klar definierte Schemadateien vorgegeben, welche eine schnelle Überprüfung der Konfiguration ermöglichen.

Neben der Konfiguration der Datenspeichereinrichtung können auch die Programmmodule bzw. Programme und deren Anschlüsse bzw. Ports mit Hilfe von Beschreibungsdateien, insbesondere durch XML-basierten Beschreibungsdateien, definiert werden. Die Beschreibungsdateien können als Metabeschreibungsdateien aufgefasst werden, mit denen jeder Anschluss bzw. Port mit seinem jeweiligen Datentyp und Datenrichtung spezifiziert werden kann. Zusätzlich lassen sich auch weitere Attribute angeben, die zur dynamischen Suche in der Datenspeichereinrichtung herangezogen werden können. Beispiele hierfür sind Einheiten oder firmenspezifische Tags. Um eine Verknüpfung von Variablen unterschiedlicher Programmierdomänen realisieren zu können, werden vorteilhafterweise alle Datentypen in einer gemeinsamen Sprache definiert. Mit dieser gemeinsamen Sprache ist es möglich, Programme zu beschreiben, die primitive, selbstdefinierte oder durch Bibliotheken bzw. Libraries vorgegebene Datentypen verwenden. Diese allgemeine Beschreibungssprache ist vorteilhaft für die Verknüpfung von Strukturen oder einzelnen Elementen dieser Strukturen.

Die Spezifikation der Datenspeichereinrichtung, der Konnektoren und der Programmmetadaten in mehreren Beschreibungsdateien bzw. in mehreren XML-Konfigurationsdateien erlaubt eine Aufteilung einer Gesamtapplikation in funktionale Module, die von unterschiedlichen Entwicklergruppen oder Zulieferern erstellt werden können. Dies erleichtert nicht nur die Entwicklung einer komplexen Anlagensteuerung, sondern auch die schrittweise Erweiterung einer laufenden Anlage. Somit muss die Gesamtapplikation nicht von Anfang an zur Verfügung stehen, sondern kann aus Teilmodulen komponiert werden. Unter einer Gesamtapplikation werden in diesem Zusammenhang alle Programme bzw. Programmmodule, Aufgaben bzw. Tasks und Konfigurationseinstellungen verstanden, die zur Ausführung auf einem Steuerungsgerät benötigt werden.

In diesem Zusammenhang werden die Begriffe "Programm" und "Programmmodul" austauschbar verwendet.

Die Beschreibungsdatei weist Metainformation bzw. Metainformationen auf. Metainformationen beschreiben Variablen und Programme, z.B. welche Variablen-Ports ein Programm anbietet und von welchem Datentyp sie sind. Unter Ports werden Variablen verstanden, die Eingänge oder Ausgänge von Programmen oder Komponenten darstellen, und sich somit (gerichtet) verschalten lassen, indem Speicherplatz in der Datenspeichereinrichtung für sie bereit gestellt wird. Metainformationen beschreiben das gesamte Programm, d.h. die Summe aller eingehenden und ausgehenden Anschlüsse bzw. Ports. Metainformationen beschreiben, den Typ der Variablen und wie diese aufgebaut sind, z.B. Bool, Integer oder komplexe, zusammengesetzte Datentypen. Ein Beispiel für eine Metainformation ist die Variable "Freigabe" vom Typ Boolean. Ein Konnektor kann eine Variable übermitteln, beispielsweise von "Freigabe" zu einem anderen Programm auf die Variable "Go" vom Typ Bit. Hierbei wird der Wert der Variable von Boolean auf Bit konvertiert.

Die Daten der Variable können in einem Speicher der Datenspeichereinrichtung geschrieben und gelesen werden. Auf welche Art dies geschieht, wird mit einem Konnektor beschrieben. Metainformationen werden benötigt, um zu beschreiben, welche Variablen ein Programm mit Hilfe von Ports anbietet. Zum Beispiel kann ein Programm "A" die Variable "Freigabe" mit dem Typ "Boolean" anbieten. Diese Variable wird in dem Speicher der Datenspeichereinrichtung angelegt und der Wert der Variable wird vom Programm "A" beschrieben. Andere Programme können über einen Konnektor, der weiss wo die Variable in dem Speicher der Datenspeichereinrichtung abgelegt ist, diesen Wert auslesen.

In einer bevorzugten Ausführungsform weist das Verfahren ferner ein Bereitstellen von Variablen in der Datenspeichereinrichtung durch ein erstes Programmodul der Programmmodule, ein Veröffentlichen der bereitgestellten Variablen durch die Datenspeichereinrichtung für mindestens ein zweites Programmodul der Programmmodule und ein Zugreifen auf die Variablen in der Datenspeichereinrichtung durch mindestens das zweites Programmodul.

In einer weiteren Ausgestaltung des Verfahrens ist ein Bereitstellen mindestens eines Buffermechanismus für das Speichern von Variablen in der Metainformation in der Datenspeichereinrichtung vorgesehen.

Es sind unterschiedliche Buffermechanismen bzw. Speichermechanismen verwendbar, wie beispielsweise ein 4-fach-Buffer, oder ein Single Buffer als eine Einfachspeicherung. Der Buffermechanismus kann beispielsweise für die Skalierung auf Systeme mit kleinem Arbeitsspeicher angepasst werden.

Mit Vorteil weist das Verfahren in einer weiteren Ausgestaltung ferner ein Verwenden einer Programmierschnittstelle an einem Programmmodul auf, wobei die Programmierschnittstelle ein Durchsuchen der Metainformation in der Datenspeichereinrichtung ermöglicht.

Ferner kann in vorteilhafter Weise bei dem Verfahren ein dynamisches Erzeugen von Konnektoren vorgesehen werden.

Beispielsweise erlaubt das Durchsuchen der Metainformationen ein dynamisches Erzeugen von Konnektoren (Subscription), z.B. durch einen OPC-UA Server. Dynamisch bedeutet in diesem Zusammenhang, dass diese Verbindung nicht durch eine Beschreibungsdatei konfiguriert wird sondern zu Laufzeit über ein API der Datenspeichereinrichtung erzeugt und auch abgebaut werden kann.

Ferner ist vorteilhafterweise bei dem Verfahren vorgesehen, dass die Datenspeichereinrichtung dazu ausgebildet ist, unter Ansprechen auf die Beschreibungsdatei wenigstens einige der Programmmodule derart mit Metainformation zu versorgen, dass sie in unterschiedlichen, von dem Echtzeitbetriebssystem verwalteten Prozessen ausführbar sind.

In einer weiteren Ausgestaltungsform des Verfahrens kann ein Konvertieren der Variablen von einem ersten Datentyp zu einem zweiten Datentyp durch den Konnektor vorgesehen werden.

Ferner kann das Verfahren vorteilhafterweise ein Durchführen einer funktionalen Operation mit dem Konnektor.

Eine weitere Option der Konnektoren ist die Möglichkeit, ähnlich einer Typumwandlung auch funktionale Operationen vorzunehmen. So lässt sich zum Beispiel ohne zusätzliche Programmierung eine Temperatur von Fahrenheit nach Celsius umrechnen.

In einer weiteren Ausgestaltungsform des Verfahrens kann ein Erweitern der Datenspeichereinrichtung durch ein zusätzliches Programmmodul vorgesehen werden, ohne dass ein Neustart eines Steuerungssystems durchgeführt wird.

Ein Steuerungssystem bezeichnet eine Ablaufsteuerung in der Programmmodule typischerweise geladen, gestartet, debuggt, gestoppt und entladen werden können. Das Steuerungssystem setzt auf dem Echtzeitbetriebssystem auf.

Es ist von Vorteil, dass eine Erweiterung des Steuerungssystems möglich ist, ohne dass das Steuerungssystem für einen Neustart unterbrochen werden muss. Auf diese Weise kann der Betrieb kontinuierlich fortgeführt werden.

Ferner kann mit Vorteil bei dem Verfahren ein Bereitstellen eines Ersatzwertes durch den Konnektor für den Fall vorgesehen werden, dass innerhalb eines definierten Zeitintervalls keine Aktualisierung einer veröffentlichten Variablen erfolgt ist.

Um den verschiedenen Anforderungen der Programme zu genügen, können Konnektoren unterschiedliche Eigenschaften aufweisen. Somit hat der Benutzer die Möglichkeit, zwischen verschiedenen Konnektoren zu wählen, die je nach den Designzielen der Anwendung einen Fokus auf zum Beispiel Echtzeitfähigkeit, Datenkonsistenz, Speicherverbrauch oder Kombinationen dieser Eigenschaften legen. Die Konnektoren können zusätzlich die Aufgabe übernehmen, Ersatzwerte bereit zu stellen, falls Programme ihre veröffentlichten Variablen nicht innerhalb eines definierten Zeitintervalls aktualisieren.

In einer weiteren vorteilhaften Ausgestaltung weist das Verfahren ein Konfigurieren des Datenspeichers mit der Beschreibungsdatei durch Definieren eines Anschlusses, eines Datentyps für den Anschluss und einer Datenrichtung des Anschlusses auf.

Hierbei ist der Begriff "Anschluss" gleichzusetzen mit der Bezeichnung "Port". Die Datenrichtung eines Anschlusses kann als Inport oder als Outport definiert werden. Die Verbindung zwischen einem Outport eines veröffentlichenden Programms und einem Inport eines abonnierenden Programms wird mit Hilfe eines Konnektors realisiert. Der Konnektor stellt eine Vielzahl von Funktionalitäten bereit. Es kann mit dem Konnektor beispielsweise eine mögliche Konvertierung zwischen unterschiedlichen Datentypen aus den beteiligten Programmdomänen vorgenommen werden. So lässt sich zum Beispiel ein INT aus einem IEC 61131-3 Programm auf einfache Weise auf ein int16 eines C++ Programms umsetzen.

Auch die Daten von anderen Komponenten, wie zum Beispiel Daten von Feldbussystemen, können in der Datenspeichereinrichtung als verknüpfbare Ports abgebildet werden. Dies ermöglicht dem Benutzer auf einfache Weise IO-Daten (IO = Input Output) mit den Programmen unterschiedlicher Programmierdomänen zu verbinden. Beispielsweise lassen sich auf diese Weise die Geräte eines Feldbusses als Variablen strukturiert darstellen und benutzerdefiniert benennen.

Ferner wird die Aufgabe der Erfindung durch eine Datenspeichereinrichtung zum Datenaustausch zwischen Programmmodulen gleicher oder unterschiedlicher Programmiersprachen in einem Echtzeitbetriebssystem gelöst, wobei die Datenspeichereinrichtung einen Speicher zur Durchführung des erfindungsgemäßen Verfahrens aufweist.

Die Datenspeichereinrichtung wird vorzugsweise als globale Datenspeichereinrichtung ausgebildet (GDS). Ferner kann die Datenspeichereinrichtung als eine zentral implementierte Softwarekomponente einer Steuerung in einer Automatisierungsanlage installiert sein. Hierbei kann die Datenspeichereinrichtung über einen Speicher gerätelokale Daten für den Austausch zwischen Programmen anbieten und ist von allen Prozessen gleichermaßen nutzbar.

In einer Ausgestaltung der Datenspeichereinrichtung ist ein Austauschbereich in dem Speicher der Datenspeichereinrichtung vorgesehen, in den Daten geschrieben und Daten ausgelesen werden können, wobei Programmmodule über Schnittstellen auf die Datenspeichereinrichtung zugreifen können.

Die Datenspeichereinrichtung und ihre Konnektoren kann einen konsistenten Austausch von Variablen innerhalb einer Aufgabe bzw. eines Tasks sowie über Taskgrenzen hinweg unterstützen. Das Prinzip der klassischen IEC 61131-3 Programmausführung wird auf die Taskausführung übertragen. Damit stehen den Programmen in anderen Tasks die Eingangsdaten taskkonsistent zur Verfügung. Darüber hinaus können Metainformationen bzw. Daten zwischen den Programmen innerhalb einer Task direkt ausgetauscht werden.

Ferner wird die Aufgabe der Erfindung durch eine Vorrichtung zum Datenaustausch zwischen Programmmodulen gleicher oder unterschiedlicher Programmiersprachen in einem Echtzeitbetriebssystem gelöst. Hierbei weist die Vorrichtung eine erfindungsgemäße Datenspeichereinrichtung, mindestens einen Prozessor und mindestens eine Schnittstelle zu einer Automatisierungseinrichtung auf.

Ferner wird die Aufgabe der Erfindung mit einem Echtzeitbetriebssystem zum Datenaustausch zwischen Programmmodulen gleicher oder unterschiedlicher Programmiersprachen gelöst. Hierbei weist das Echtzeitbetriebssystem eine Datenspeichereinrichtung, mindestens eine hinterlegte Beschreibungsdatei, mit der die Datenspeichereinrichtung konfigurierbar ist, und mehrere von dem Echtzeitbetriebssystem ausführbare Programmmodule auf, die unter Verwendung gleicher oder unterschiedlicher Programmiersprachen erstellt sind. Hierbei ist die Datenspeichereinrichtung dazu ausgebildet, die Programmmodule unter Verwendung von Konnektoren miteinander zu verbinden, um mindestens eine Variable zwischen Programmodulen auszutauschen, wobei die Metainformation mit der mindestens einen Variablen in der Datenspeichereinrichtung gespeichert ist.

Die Metainformation mit der mindestens einen Variablen kann von den Konnektoren zum Verbindungsaufbau genutzt werden. Ferner werden eine oder mehrere Beschreibungsdateien verwendet, die beispielsweise als XML-Datei ausgestaltet sein können. Bei einer Mehrzahl von Beschreibungsdateien können diese zu einer Konfiguration bzw. Gesamtkonfiguration zusammengefügt werden. Dies kann durch eine den Beschreibungsdateien übergeordnete Konfigurationsdatei geschehen.

Ferner wird die Aufgabe der Erfindung mit einem Computerprogrammprodukt mit Programmcodemitteln zum Durchführen des erfindungsgemäßen Verfahrens gelöst, wobei das Computerprogrammprodukt auf einem Computersystem in einem Echtzeitbetriebssystem abläuft.

Einige Ausführungsbeispiele der Erfindung sind in den Zeichnungen rein schematisch dargestellt und werden nachfolgend näher beschrieben. Es zeigt:
- Fig. 1: ein Ausführungsbeispiel einer Vorrichtung zum Datenaustausch zwischen Programmmodulen in einem Echtzeitbetriebssystem;
- Fig. 2: ein Ausführungsbeispiel für eine Verknüpfung von Ports mit unterschiedlichen Datentypen zur Steuerung einer Maschine; und
- Fig. 3: ein Ausführungsbeispiel für ein Ausführen von Aufgaben mit unterschiedlichen Programmmodulen in einem Echtzeitbetriebssystem.

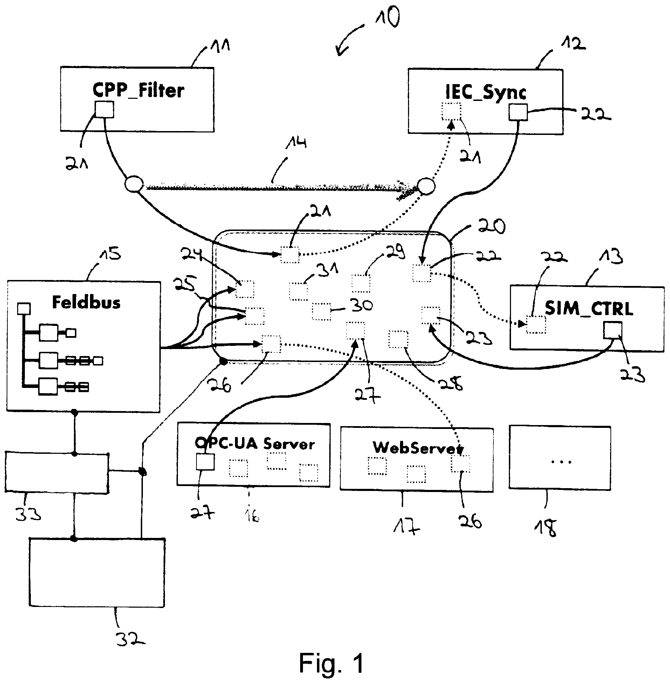

Fig. 1 zeigt ein Ausführungsbeispiel einer Vorrichtung 10 zum Datenaustausch zwischen Programmmodulen 11, 12, 13 in einem Echtzeitbetriebssystem. Hierbei wird ein Austausch von Echtzeitdaten zwischen den Programmmodulen 11, 12, 13 über eine Datenspeichereinrichtung 20 durchgeführt. Die Programmodule 11, 12, 13 mit den Programmen CPPFilter, IEC Sync und SIM_CTRL können über Konnektoren zum Datenaustausch miteinander verbunden werden. Ein beispielhafter Konnektor 14, bzw. auch "Intelligenter Konnektor" bezeichnet, ist zwischen den Programmmodulen 11 und 12 schematisch als Pfeil gezeigt, der als "intelligenter Konnektor" bezeichnet werden kann. Der Konnektor 14 stellt eine Verbindung von dem Programmmodul 11 zu dem Programmmodul 12 über die Datenspeichereinrichtung 20 bereit.

Hierbei ist in Fig. 1 die Verbindung von dem Programmmodul 11 mit dem CPP_Filter in den globalen Speicher 20 und dann von dort zu dem Programmmodul 12 mit dem IEC_Sync Programm eine vereinfachte Darstellung, wie auf die Daten zugegriffen bzw. Daten abgelegt werden. Der Konnektor 20 definiert, wie die Datenquelle (CPP_Filter) die Variablen/Daten schreiben und die Datensenke (IEC_Sync) diese einlesen kann. Dabei wird mit "Intelligenter Konnektor" bezeichnet, dass unter anderem auch Informationen über Konvertierungen der Daten mit angeben werden können.

Zusätzlich zu dem Namen der Variable können in der Datenspeichereinrichtung 20 zusätzlich noch weitere Metainformationen abgelegt werden. Hierzu gehören unter anderem der Zeitpunkt der letzten Änderung, Zugriffsrechte, Sichtbarkeit, Datentyp, benutzerdefinierte Attribute oder ein beschreibender Text.

Neben den Basisdatentypen, die aus jeder Programmiersprache bekannt sind, können die Konnektoren 14 auch benutzerdefinierte Datentypen miteinander verknüpfen, wie zum Beispiel Strukturen, Arrays oder Kombinationen dieser beiden. Dabei kann eine Verknüpfung auf den ganzen Datentyp oder Teile davon angewendet werden.

Ferner sind in Fig. 1 weitere Komponenten schematisch dargestellt, die beispielsweise als Softwarekomponenten ausgeführt sind, wie ein Feldbus 15, ein OPC-UA Server 16, ein Webserver 17 und eine weitere beliebige Komponente 18 einer Automatisierungsanlage, die jeweils auf bereit gestellte Daten 21-31 in der Datenspeichereinrichtung 20 lesend und schreibend zugreifen.

Ferner weist die Datenspeichervorrichtung 10 einen Prozessor 32 und eine Schnittstelle 33 zu einer Automatisierungseinrichtung auf. Im vorliegenden Beispiel ist die Datenspeichereinrichtung 20 verbunden mit dem Prozessor 32 wie auch mit der Schnittstelle 33. Die Verbindungen können drahtgebunden oder drahtlos sein. Ferner ist im vorliegenden Ausführungsbeispiel die Schnittstelle 33 mit einer Komponente des Feldbusses 15 verbunden.

Die Datenspeichereinrichtung 11 der Fig. 1 ist ein globaler Speicher zur Ablage von Daten, wobei die Daten 21-31 als Metadaten oder Metainformation ausgeführt sind und mindestens eine Variable enthalten. Diese Variablen können in der Datenspeichereinrichtung 11 veröffentlicht werden und anderen Programmmodulen 11, 12, 13 oder Komponenten 15, 16, 17, 18 zur Verfügung gestellt werden, indem diese sie abonnieren und in Echtzeit erhalten.

Jedes Programmmodul 11, 12, 13, unabhängig davon aus welcher Programmierdomäne, erhält durch die Verwendung einer vorgegebenen API die Möglichkeit, Variablen in der Datenspeichereinrichtung 20 als globaler Datenraum abzulegen. Ein Ablegen und Veröffentlichen von Variablen kann durch eine statische Konfiguration beim Systemstart sowie dynamisch zur Laufzeit erfolgen. Dabei erhalten die Variablen einen eindeutigen Namen, mit dem sie in der Datenspeichereinrichtung 20 gesucht werden können. Nach der Veröffentlichung kann die Variable von anderen Programmmodulen abonniert und somit deren Werte verwendet werden. Eine veröffentlichte Variable wird als Inport oder Outport definiert, je nach lesender oder schreibender Datenrichtung.

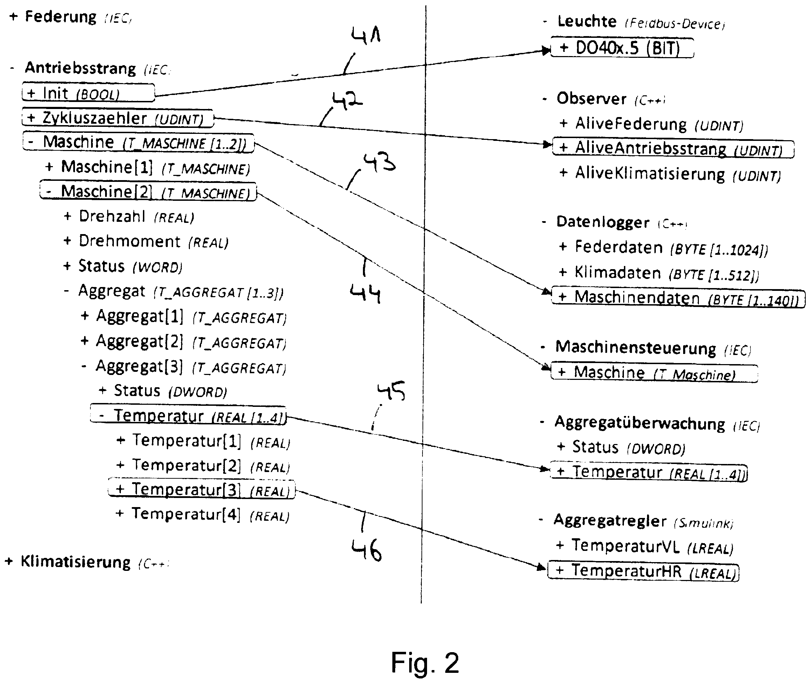

Fig. 2 zeigt ein Ausführungsbeispiel für eine Verknüpfung von Ports mit unterschiedlichen Datentypen zur Steuerung einer Maschine, insbesondere zur Steuerung eines Antriebsstranges der Maschine. Dabei repräsentieren die Verbindungen 41 bis 46 Konnektoren, wie in Fig. 1 gezeigt. Die Ports, die in Fig. 1 verschaltet werden, sind nicht in den anderen Figuren dargestellt. Der Konnektor 41 zeigt eine Konvertierung von Bool zu BIT, Konnektor 44 die Verschaltung von Strukturen und deren Elemente und der Konnektor 46, die Verschaltung von Vektorelementen inklusive Byte-Swapping, Skalierung/Offsetkorrektur und Typkonvertierung. Dabei kann eine Verknüpfung auf den ganzen Datentyp oder Teile davon angewendet werden.

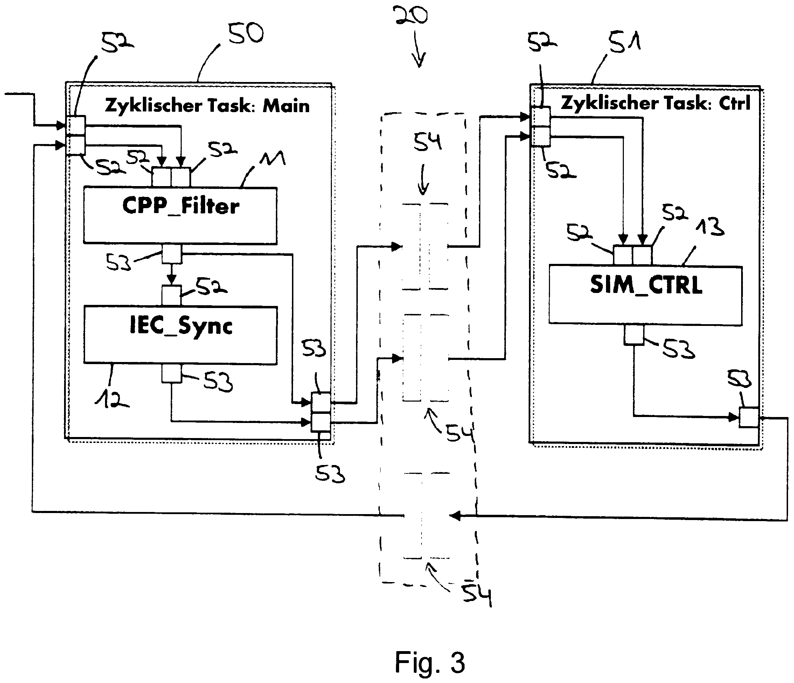

Fig. 3 zeigt ein Ausführungsbeispiel für ein Ausführen von Aufgaben 50, 51 mit unterschiedlichen Programmmodulen 11, 12, 13 in einem Echtzeitbetriebssystem. Die Programmodule 11, 12, 13 erhalten ihre Daten, insbesondere abonnierte Variablen, aus der Datenspeichereinrichtung 20, so wie in Fig. 1 dargestellt und beschrieben.

Fig. 3 zeigt einen exemplarischen Aufbau von Aufgaben 50, 51 bzw. Tasks, Programmen und Konnektoren unter der Berücksichtigung einer Ablaufsteuerung. Der taskkonsistente Datenaustausch zwischen der Aufgabe 50 als Main-CyclicTask und der Aufgabe 51 als Ctrl-CyclicTask bzw. Steueraufgabe wird durch Buffermechanismen 54 der Datenspeichereinrichtung 20 realisiert. Die Datenkonsistenz ist unabhängig von den einzelnen Aufgaben 50, 51 bzw. Tasks, deren Priorität und deren zeitlichen Verhalten.

Die erste Aufgabe 50 weist die Programmodule 11 und 12 mit den Programmen CPP_Filter und IEC_Sync auf, wobei sich die Programmiersprachen der Programmodule 11, 12 voneinander unterscheiden. Ferner weist die zweite Aufgabe 51 das Programmmodul 13 mit dem Programm SIM_CTRL auf. Auch das Programmmodul 13 ist in einer anderen Programmiersprache verfasst im Vergleich zu den Programmiersprachen der Programmodule 11, 12. Somit weisen alle der Programmmodule eine andere Programmiersprache auf.

Fig. 3 gibt einen schematischen Aufbau von Verbindungen zwischen Ports wieder. Hierbei gibt es ein- und ausgehende Ports, die als Inports 52 und Outports 53 bezeichnet werden, und über die Eingangsdaten bzw. Ausgangsdaten gesendet werden.

Die Konnektoren sind die in Fig. 3 eingezeichneten Pfeile innerhalb und außerhalb der Aufgaben 50, 51. Hierbei werden die Konnektoren über Buffermechanismen 54, wie beispielsweise über einen 4-fach-Speicher, für nicht blockierenden und zykluskonsistenten Austausch der Daten zwischen den Programmmodulen 11, 12, 13 synchronisiert. Mit den Konnektoren wird definiert, auf welche Art und Weise die Daten später zum Ziel kopiert werden. Ein Beispiel für einen Konnektor ist der gesamte Pfad vom Ausgang 53 der Aufgabe 51 zum Eingang 52 der Aufgabe 50 über den Buffermechanismus 54 der Datenspeichereinrichtung 20.

In Fig. 3 gibt es in der Aufgabe 50 auch eine direkte Verbindung von dem Programmodul 11 mit CPP_Filter zu dem Programmmodul 12 mit IEC_Sync, ohne dass ein Weg über die weiter dargestellten Konnektoren verwendet wird. Diese Verbindung ist nicht in Fig. 1 dargestellt.

Durch die Bereitstellung der erfindungsgemäßen Datenspeichereinrichtung 20 als globaler Datenspeicher bzw. als Global Data Space (GDS) und als Teil einer Datenspeichervorrichtung 10 wird eine Möglichkeit für die gleichwertige Kommunikation zwischen Programmen bzw. Programmmodulen 11, 12, 13 unterschiedlicher Programmierdomänen realisiert. Es ist ein Echtzeit-Datenaustausch zwischen Programmmodulen 11, 12, 13 bzw. Programmen möglich, die auch in unterschiedlichen Programmiersprachen geschrieben sein können. Dabei kann die Datenspeichereinrichtung 20 die Funktion eines Datenpools übernehmen, der die Verknüpfung sowohl von primitiven als auch von komplexen Datentypen unterschiedlicher Programmiersprachen erlaubt. Hierbei werden hohe Anforderungen an die Konsistenz der Daten und die Leistung beim Datenaustausch, insbesondere im Echtzeitbetrieb, gefordert und erfüllt. Die Datenspeichereinrichtung 20 ermöglicht eine Verwaltung der hergestellten Datenverbindungen zwischen Programmen und den Metainformationen, die ein Browsen und dynamisches Verbinden auf die vorhandenen Daten ermöglichen.

Insgesamt wird erfindungsgemäß eine Funktionalität als Bestandteil einer neuen Firmwarearchitektur ermöglicht, auf deren Basis neue Industriesteuerungen realisiert werden können. Ausgelegt ist diese Architektur zunächst für die Verwendung auf einem Gerät bzw. Steuergerät.

Es wird hierbei angestrebt, die Ergänzung der klassischen Programmierung von Steuerungen um Hochsprachen zu unterstützen. Hierfür wird ein weicher Übergang zwischen der IEC 61131-3 und der Hochsprachenwelt angestrebt. Voraussetzung hierfür ist neben der Unterstützung solcher Sprachen auch die nahtlose Integration der unterschiedlichen Programmierdomänen. Hierzu zählen unter anderem Matlab/Simulink, C++, C#, JAVA, Python und die Sprachen der IEC 61131-3. Für eine solche nahtlose Integration sollte die Steuerung in der Lage sein, den aus der IEC 61131-3 bekannten Ablauf mit Programminstanzen und Aufgaben bzw. Tasks in den Ablauf der anderen Programmierdomänen zu übertragen. Trotz dieser komplexeren Anforderungen an die technische Realisierung werden zusätzlich Aspekte der Datensicherheit, Benutzbarkeit, Flexibilität und vor allem Leistungsfähigkeit gewährleistet.

Nachfolgend ist beispielhaft ein möglicher Inhalt einer Beschreibungsdatei zur Konfiguration einer Datenspeichereinrichtung in XML-Format angegeben:

```
 <?xml version="1.0" encoding="utf-8"?>
 <GdsConfigurationDocument>
 
 <GdsComponentSettings>
 <SharedDataSettings Size="1000000" />
 <SharedMetaDataSettings Size="1000000" />
 <SharedMetaConfigSettings Size="1000000" />
 <MetaDataPaths>
 <MetaDataPath ConfigPath="./CppCounter.meta.config" />
 <MetaDataPath ConfigPath="./CppConfig.meta.config" />
 <MetaDataPath ConfigFath="./PizController.meta.config" />
 </MetaDataPaths>
 </GdsComponentSettings>
 
 <TaskBufferRelations>
 <Task-BufferRelation Task="TaskConf" BufferType="Single"/>
 <TaskBufferRelation Task="TaskMain" BufferType="Default"/>
 <TaskBufferRelation Task="TaskCount' BufferType="Quad"/>
 </TaskBufferRelations>
 
 <Connections>
 <Connection
 StartPort="Arp.Demonstrator.CppCounter-1/CppCounter-1:CounterI6"
 EndPort="Arp.Fbi.Profinet.Pnc-0/3.3:D016"
 Min="" Max="" Log="True" RangeCheck="false"/>
 <Connection
 StartPort="Arp.Fbi.Profinet.Pnc-0/2.2:FreigabeTaster"
 EndPort="Arp.Demonstrator.CppConfig-1/CppConfig-1:FreigabeTaster"
 Min="" Max="" Log="True" RangeCheck="false"/>
 <Connection
 StartPort="Arp.Demonstrator.CppConfig-1/CppConfig-I:Freigabe"
 EndPort="Arp.Fbi.Profinet.Pnc-0/2.2:FreigabeLed"
 Min="" Max="" Log="True" RangeCheck="false"/>
 <Connection
 StartPort="Arp.Demonstrator.CppConfig-1/CppConfig-I:Freigabe"
 EndPort="Arp.Demonstrator.PizController-I/PizController-1/:Freigabe_Regler"
 Min="" Max="" Log="True" RangeCheck="false"/>
 <Connection
 StartPort="Arp.Demonstrator.CppConfig-1/CppConfig-I:theta_soll"
 EndPort="Arp.Demonstrator.PizController-I/PizController-1:theta_soll"
 Min="" Max="" Log="True" RangeCheck="false"/>
 <Connection
 StartPort="Arp.Demonstrator.CppConfig-1/CppConfig-I:psi_soll"
 EndPort="Arp.Demonstrator.PizController-I/PizController-1:psi-soll"
 Min="" Max="" Log="True" RangeCheck="false"/>
 <Connection
 StartPort="Arp.Demonstrator.PizController-I/PizController-1:U_G_converted"
 EndPort="Arp.Fbi.Profinet.Pnc-0/2.2:U_G_converted"
 Min="" Max="" Log="True" RangeCheck="false"/>
 <Connection
 StartPort="Arp.Demonstrator.PizController-I/PizController-1:U_N_converted"
 EndPort="Arp.Fbi.Profinet.Pnc-0/2.2:U_N_converted"
 Min="" Max="" Log="True" RangeCheck="false"/>
 <Connection
 StartPort="Arp.Fbi.Profinet.Pnc-0/1.1 :theta" EndPort="Arp.Demonstrator.PizController-
 I/PizController-1:theta"
 Min="" Max="" Log="True" RangeCheck="false"/>
 <Connection
 StartPort="Arp.Fbi.Profinet.Pnc-0/1.1:psi" EndPort="Arp.Demonstrator.PizController-
 I/PizController-1:psi"
 Min="" Max="" Log="True" RangeCheck="false"/>
 <Connection
 StartPort="Arp.Fbi.Profinet.Pnc-0/1.1:dot_theta"
 EndPort="Arp.Demonstrator.PizController-I/PizController-1:dot_theta"
 Min="" Max="" Log="True" RangeCheck="false"/>
 <Connection
 StartPort="Arp.Fbi.Profinet.Pnc-0/1.1:dot psi"
 EndPort="Arp.Demonstrator.PizController-I/PizController-1:dot_psi"
 Min="" Max="" Log="True" RangeCheck="false"/>
 </Connections>
 
 </GdsConfigurationDocument>
```

Nachfolgend ist beispielhaft ein möglicher Inhalt einer Datei mit Metainformationen zu einem Programmmodul in XML-Format angegeben:

```
 <MetaConfiguration Document
 xmlns:td="http://www.phoenixcontact.com/schema/typedomain"
 xmlns="http://www.phoenixcontact.com/schema/metaconfig"
 xmlns:xsi="http://www.w3.org/2001/XMLSchema-instance"
 xsi:schemaLocation="http://www.phoenixcontact.com/schema/metaconfig"
 schemaVersion="I.3" >
 <Program
 name="PizController"
 version="1.0"
 typeDomain="com.phoenixcontact.arp.basetypes.cpp">
 
 <Descriptions>
 <Description languageld="DE" text="Eine Programmbeschreibung" />
 <Description languageld="EN" text="A program description" />
 </Descriptions>

 <!-- List of events that can be triggered by this program -->
 <Events>
 <Event name="ExampleEventThrownByAProgram" >
 <Descriptions>
 <Description languageld="EN" text="An example Event that is thrown by this program"
 />
 </Descriptions>
 </Event>
 </Events>
 
 <Ports>
 <Port name="CompPerson" type="Arp.Demonstrator.PizControllerComponent:Person"
 kind="Output" multiplicity="1">
 <Descriptions>
 <Description languageld="DE" text="Typ wurde in Komponente definiert" />
 </Descriptions>
 </Port>
 <Port name="FunktionsStatus" type="float" kind="Output" multiplicity="I">
 <Descriptions>
 <Description languageld="DE" text="Typ wurde in externer Typdomain definiert" />
 </Descriptions>
 </Port>
 <Port name="theta_soll" type="float" kind="Input" multiplicity="1">
 <Attributes>
 <Attribute name="Farbe" value="Rot" />
 </Attributes>
 <Descriptions>
 <Description languageld="DE" text="Typ gehoert zur typeDomain des Programms.
 Dazu kommt noch ein Attribut." />
 </Descriptions>
 </Port>
 <Port name="psi_soll" type="float" kind="Input" multiplicity="1" />
 <Port name="theta" type="float" kind="Input" multiplicity="1" />
 <Port name="psi" type="float" kind="Input" multiplicity="1" />
 <Port name="dot_theta" type="float" kind=Input" multiplicity="I" />
 <Port name="dot_psi" type="float" kind="Input" multiplicity="1" />
 <Port name="Freigabe_Regler" type="bool" kind="Input" multiplicity="1" />
 <Port name="IAnteil_Aktiv" type="bool" kind="Input" multiplicity="1" />
 <Port name="U_N" type="float" kind="Output" multiplicity="I" />
 <Port name="U_G" type="float" kind="Output" multiplicity="I" />
 <Port name="Sine" type="float" kind="Output" multiplicity="1" />
 <Port name="U_G_converted" type="intI6" kind="Output" multiplicity="1" />
 <Port name="U_N_converted" type="intI6" kind="Output" multiplicity="1" />
 </Ports>
 
 </Program>
 
 </MetaConfiguration Document>
```

### Bezugszeichenliste

- 10: Vorrichtung
- 11: Programmmodul
- 12: Programmmodul
- 13: Programmmodul
- 14: Konnektor
- 15: Feldbus bzw. engl. Fieldbus
- 16: OPC-UA Server
- 17: Datenspeichereinrichtung
- 18: Komponente
- 20: Datenspeichereinrichtung
- 21-31: Daten
- 32: Prozessor
- 33: Schnittstelle
- 41-46: Konnektoren
- 50: Aufgabe
- 51: Aufgabe
- 52: Eingang bzw. Inport
- 53: Ausgang bzw. Outport
- 54: Buffermechanismus

## Patentansprüche

1. Verfahren zum Austausch von Echtzeitdaten zwischen Programmmodulen (11, 12, 13), wobei die Programmmodule auf einem Steuerungsgerät in einer Automatisierungsanlage ausgeführt werden, und wobei die Programmmodule Teil einer Gesamtapplikation zur Ausführung auf dem Steuerungsgerät sind, umfassend
Bereitstellen einer Datenspeichereinrichtung (20), welche einen globalen Datenraum bereitstellt, in welchem die Programmmodule Variablenwerte ablegen können, so dass andere Programmmodule auf diese zugreifen können, wobei die Datenspeichereinrichtung eine Softwarekomponente aufweist, welche einen Teil der Firmware des Steuerungsgerätes bildet,
Bereitstellen mindestens einer Beschreibungsdatei, wobei die Beschreibungsdatei Metainformation aufweist, die beschreibt welche Variablen ein Programmmodul mit Hilfe von Ports anbietet,
Konfigurieren der Datenspeichereinrichtung (20) mit der Beschreibungsdatei, wobei die Metainformation der Beschreibungsdatei in der Datenspeichereinrichtung gespeichert wird, wobei die gespeicherte Metainformation (21-31) mindestens eine Variable aufweist,
und wobei mindestens ein Konnektor (14) bereitgestellt wird, wobei der Konnektor eine Funktionalität der Datenspeichereinrichtung bezeichnet, die eine Verbindung von einem der Programmodule zu einem anderen der Programmmodule über die Datenspeichereinrichtung bereitstellt, wobei der Konnektor beschreibt, auf welche Art Daten der Variable in einem Speicher der Datenspeichereinrichtung geschrieben und gelesen werden, so dass zwischen den Programmmodulen (11, 12, 13) über die Datenspeichereinrichtung (20) eine Verbindung herstellbar ist,
wobei die Programmmodule (11, 12, 13) von einem Echtzeitbetriebssystem ausführbar sind, und
Austauschen der Variablen zwischen einem der Programmmodule (11, 12, 13) und der Datenspeichereinrichtung (20) über den Konnektor (14),
ferner aufweisend
Bereitstellen von Variablen in der Datenspeichereinrichtung (20) durch ein erstes Programmmodul der Programmmodule (11, 12, 13),
Veröffentlichen der bereitgestellten Variablen durch die
Datenspeichereinrichtung (20) für mindestens ein zweites Programmmodul der Programmmodule (11, 12, 13), und
Zugreifen auf die Variablen in der Datenspeichereinrichtung (20) durch mindestens das zweite Programmmodul.

2. Verfahren nach Anspruch 1, wobei die Programmmodule (11, 12, 13) unter Verwendung unterschiedlicher Programmiersprachen erstellt sind.

3. Verfahren nach einem der Ansprüche 1 oder 2,
ferner aufweisend
Bereitstellen mindestens eines Buffermechanismus (34) für das Speichern von Variablen (21-31) in der Datenspeichereinrichtung (20).

4. Verfahren nach einem der vorstehenden Ansprüche,
ferner aufweisend
Verwenden einer Programmierschnittstelle an einem Programmmodul (11, 12, 13), wobei die Programmierschnittstelle ein Durchsuchen der Metainformation (21-31) in der Datenspeichereinrichtung (20) ermöglicht.

5. Verfahren nach einem der vorstehenden Ansprüche,
ferner aufweisend
dynamisches Erzeugen von Konnektoren (14).

6. Verfahren nach einem der vorstehenden Ansprüche,
**dadurch gekennzeichnet, dass**
die Datenspeichereinrichtung (20) dazu ausgebildet ist, unter Ansprechen auf die Beschreibungsdatei wenigstens einige der Programmmodule (11, 12, 13) derart mit Metainformation (21-31) zu versorgen, dass sie in unterschiedlichen, von dem Echtzeitbetriebssystem verwalteten Prozessen ausführbar sind.

7. Verfahren nach einem der vorstehenden Ansprüche,
ferner aufweisend
Konvertieren der Variablen von einem ersten Datentyp zu einem zweiten Datentyp durch den Konnektor (14).

8. Verfahren nach einem der vorstehenden Ansprüche,
ferner aufweisend
Durchführen einer funktionalen Operation mit dem Konnektor (14).

9. Verfahren nach einem der vorstehenden Ansprüche,
ferner aufweisend
Erweitern der Datenspeichereinrichtung (20) durch ein zusätzliches Programmmodul (11, 12, 13), ohne dass ein Neustart eines Steuerungssystems durchgeführt wird.

10. Verfahren nach einem der vorstehenden Ansprüche,
ferner aufweisend
Bereitstellen eines Ersatzwertes durch den Konnektor (14) für den Fall, dass innerhalb eines definierten Zeitintervalls keine Aktualisierung einer veröffentlichten Variablen erfolgt ist.

11. Verfahren nach einem der vorstehenden Ansprüche,
ferner aufweisend
Konfigurieren der Datenspeichereinrichtung (20) mit der Beschreibungsdatei durch Definieren eines Ports, eines Datentyps für den Port und einer Datenrichtung des Ports.

12. Datenspeichereinrichtung (20) zum Datenaustausch zwischen Programmmodulen (11, 12, 13) in einem Echtzeitbetriebssystem, wobei die Programmmodule (11, 12, 13) von dem Echtzeitbetriebssystem auf einem Steuerungsgerät in einer Automatisierungsanlage als Teil einer Gesamtapplikation zur Ausführung auf dem Steuerungsgerät ausführbar sind, wobei die Datenspeichereinrichtung eine Softwarekomponente und einen Speicher aufweist, wobei die Softwarekomponente einen Teil der Firmware des Steuerungsgerätes bildet, und wobei die Datenspeichereinrichtung einen globalen Datenraum bereitstellt, in welchem die Programmmodule Variablenwerte ablegen können, so dass andere Programmmodule auf diese zugreifen können, und wobei die Datenspeichereinrichtung mit einer Beschreibungsdatei konfigurierbar ist, wobei die Beschreibungsdatei Metainformation aufweist, die beschreibt welche Variablen ein Programmmodul mit Hilfe von Ports anbietet, und wobei die Metainformation der Beschreibungsdatei in der Datenspeichereinrichtung gespeichert wird, wobei die gespeicherte Metainformation (21-31) mindestens eine Variable aufweist, und wobei die Datenspeichereinrichtung dazu ausgebildet ist, mindestens einen Konnektor (14) bereitzustellen, wobei der Konnektor eine Funktionalität der Datenspeichereinrichtung bezeichnet, die eine Verbindung von einem der Programmodule zu einem anderen der Programmmodule über die Datenspeichereinrichtung bereitstellt, wobei der Konnektor beschreibt, auf welche Art Daten der Variable in einem Speicher der Datenspeichereinrichtung geschrieben und gelesen werden, so dass zwischen den Programmmodulen (11, 12, 13) über die Datenspeichereinrichtung (20) eine Verbindung herstellbar ist, und wobei
die Datenspeichereinrichtung zum Austauschen der Variablen zwischen einem der Programmmodule (11, 12, 13) und der Datenspeichereinrichtung (20) über den Konnektor (14) ausgebildet ist, und wobei
die Datenspeichereinrichtung ferner dazu ausgebildet ist,
durch ein erstes Programmmodul der Programmmodule (11, 12, 13) in der Datenspeichereinrichtung (20) bereitgestellte Variablen für mindestens ein zweites Programmmodul der Programmmodule (11, 12, 13) zu veröffentlichen, so dass auf die Variablen in der Datenspeichereinrichtung (20) durch mindestens das zweite Programmmodul zugegriffen werden kann.

13. Datenspeichereinrichtung (20) nach Anspruch 12, wobei die Datenspeichereinrichtung (20) zum Datenaustausch zwischen Programmmodulen (11, 12, 13) unterschiedlicher Programmiersprachen ausgebildet ist.

14. Datenspeichereinrichtung (20) nach einem der Ansprüche 12 oder 13, aufweisend einen Austauschbereich in dem Speicher, in den Daten geschrieben und Daten ausgelesen werden können, wobei die Datenspeichereinrichtung dazu ausgebildet ist, dass Programmmodule (11, 12, 13) über Programmierschnittstellen auf die Datenspeichereinrichtung (20) zugreifen können.

15. Vorrichtung (10) zum Datenaustausch zwischen Programmmodulen (11, 12, 13) in einem Echtzeitbetriebssystem aufweisend
eine Datenspeichereinrichtung (20) nach einem der Ansprüche 12 bis 14; mindestens einen Prozessor (32), und
mindestens eine Schnittstelle (33) zu einer Automatisierungseinrichtung,

16. Vorrichtung (10) nach Anspruch 15, wobei die Vorrichtung zum Datenaustausch zwischen Programmmodulen (11, 12, 13) unterschiedlicher Programmiersprachen ausgebildet ist.

## Claims

1. A method for exchanging real-time data between program modules (11, 12, 13), wherein the program modules are executed on a control device in an automation system, and wherein the program modules are part of an overall application for execution on said control device, comprising
providing a data storage means (20) which provides a global data space in which the program modules can store variable values so that other program modules can access them, wherein the data storage means has a software component which forms part of the firmware of the control device;
providing at least one description file, wherein the description file comprises meta information that describes which variables a program module offers by using ports;
configuring the data storage means (20) using the description file, wherein the meta information of the description file is stored in the data storage means, wherein the stored meta information (21 - 31) comprises at least one variable, and wherein at least one connector (14) is provided, wherein the connector denotes a functionality of the data storage means which provides a connection from one of the program modules to another one of the program modules via the data storage means, wherein the connector describes the manner in which data of the variable is written and read in a memory of the data storage means, so that a connection can be established between the program modules (11, 12, 13) via the data storage means (20);
wherein the program modules (11, 12, 13) can be executed by a real-time operating system; and
exchanging the variable between one of the program modules (11, 12, 13) and the data storage means (20) via the connector (14); further comprising
providing variables in the data storage means (20) by a first program module of the program modules (11, 12, 13);
publishing the provided variables by the data storage means (20) for at least one second program module of the program modules (11, 12, 13); and
accessing the variables in the data storage means (20) by at least the second program module.

2. The method according to claim 1, wherein the program modules (11, 12, 13) are created using different programming languages.

3. The method according to any one of claims 1 or 2, further comprising providing at least one buffer mechanism (34) for the storing of variables (21 - 31) in the data storage means (20).

4. The method according to any one of the preceding claims, further comprising using a programming interface on a program module (11, 12, 13), wherein the programming interface allows to search through the meta information (21 - 31) in the data storage means (20).

5. The method according to any one of the preceding claims, further comprising dynamically generating connectors (14).

6. The method according to any one of the preceding claims, **characterized in that** the data storage means (20) is adapted to respond to the description file by supplying at least some of the program modules (11, 12, 13) with meta information (21 - 31) such that they can be executed in different processes managed by the real-time operating system.

7. The method according to any one of the preceding claims, further comprising converting the variables from a first data type to a second data type, by the connector (14).

8. The method according to any one of the preceding claims, further comprising performing a functional operation using the connector (14).

9. The method according to any one of the preceding claims, further comprising expanding the data storage means (20) by an additional program module (11, 12, 13) without restarting a control system.

10. The method according to any one of the preceding claims, further comprising providing a substitute value by the connector (14) in the event that a published variable has not been updated within a predefined time interval.

11. The method according to any one of the preceding claims, further comprising configuring the data storage means (20) with the description file by defining a port, a data type for the port, and a data direction of the port.

12. A data storage means (20) for data exchange between program modules (11, 12, 13) in a real-time operating system, wherein the program modules (11, 12, 13) are executable by the real-time operating system on a control device in an automation system as part of an overall application for execution on the control device;
wherein the data storage means comprises a software component and a memory, wherein the software component forms part of the firmware of the control device, and wherein the data storage means provides a global data space in which the program modules can store variable values so that other program modules can access them, and wherein the data storage means can be configured with a description file, wherein the description file comprises meta information describing which variables a program module offers by using ports, and wherein the meta information of the description file is stored in the data storage means, wherein the stored meta information (21 - 31) comprises at least one variable, and wherein the data storage means is adapted to provide at least one connector (14), wherein the connector denotes a functionality of the data storage means which provides a connection from one of the program modules to another one of the program modules via the data storage means, wherein the connector describes the manner in which data of the variable is written and read in a memory of the data storage means, so that a connection can be established between the program modules (11, 12, 13) via the data storage means (20); and wherein
the data storage means is adapted for exchanging the variables between one of the program modules (11, 12, 13) and the data storage means (20) via the connector (14); and wherein the data storage means is further adapted to publish variables provided by a first program module of the program modules (11, 12, 13) in the data storage means (20) for at least one second program module of the program modules (11, 12, 13) so that the variables in the data storage means (20) can be accessed by at least the second program module.

13. The data storage means (20) according to claim 12, wherein the data storage means (20) is adapted for data exchange between program modules (11, 12, 13) of different programming languages.

14. The data storage means (20) according to any one of claims 12 or 13, comprising an exchange area in the memory into which data can be written and from which data can be read, wherein the data storage means is adapted to enable program modules (11, 12, 13) to access the data storage means (20) via programming interfaces.

15. A device (10) for data exchange between program modules (11, 12, 13) in a real-time operating system, comprising
a data storage means (20) according to any one of claims 12 to 14;
at least one processor (32); and
at least one interface (33) to an automation device.

16. The device (10) according to claim 15, wherein the device is adapted for data exchange between program modules (11, 12, 13) of different programming languages.

## Revendications

1. Procédé pour l'échange de données en temps réel entre des modules de programme (11, 12, 13), dans lequel les modules de programme sont exécutés sur un appareil de commande dans une installation d'automatisation, et dans lequel les modules de programme font partie d'une application globale à exécuter sur l'appareil de commande, comprenant les étapes consistant en
la fourniture d'un dispositif de stockage de données (20), lequel fournit un espace de données mondiales, dans lequel les modules de programme peuvent déposer des valeurs de variable, de sorte que d'autres modules de programme peuvent accéder à celles-ci, où le dispositif de stockage de données présente un composant de logiciel, lequel forme une partie du micrologiciel de l'appareil de commande,
la fourniture d'au moins un fichier de description, où le fichier de description présente une méta-information, qui décrit quelles variables un module de programme offre à l'aide de ports,
la configuration du dispositif de stockage de données (20) avec le fichier de description, où la méta-information du fichier de description est stockée dans le dispositif de stockage de données, où la méta-information (21-31) stockée présente au moins une variable,
et dans lequel au moins un connecteur (14) est fourni, où le connecteur indique une fonctionnalité du dispositif de stockage de données, qui fournit une liaison d'un des modules de programme à un autre des modules de programme par l'intermédiaire du dispositif de stockage de données, où le connecteur décrit de quelle façon les données de la variable sont écrites et lues dans une mémoire du dispositif de stockage de données, de sorte qu'une liaison peut être établie entre les modules de programme (11, 12, 13) par l'intermédiaire du dispositif de stockage de données (20),
dans lequel les modules de programme (11, 12, 13) peuvent être exécutés par un système d'exploitation en temps réel, et
l'échange des variables entre un des modules de programme (11, 12, 13) et le dispositif de stockage de données (20) par l'intermédiaire du connecteur (14),
présentant en outre
la fourniture de variables dans le dispositif de stockage de données (20) par un premier module de programme des modules de programme (11, 12, 13),
la publication des variables fournies par le dispositif de stockage de données (20) pour au moins un deuxième module de programme des modules de programme (11, 12, 13), et
l'accès aux variables dans le dispositif de stockage de données (20) par au moins le deuxième module de programme.

2. Procédé selon la revendication 1, dans lequel les modules de programme (11, 12, 13) sont élaborés en utilisant différents langages de programmation.

3. Procédé selon l'une quelconque des revendications 1 ou 2, présentant en outre
la fourniture d'au moins un mécanisme de mémoire tampon (34) pour le stockage de variables (21-31) dans le dispositif de stockage de données (20).

4. Procédé selon l'une quelconque des revendications précédentes, présentant en outre
l'utilisation d'une interface de programmation sur un module de programme (11, 12, 13), où l'interface de programmation permet une recherche de la méta-information (21-31) dans le dispositif de stockage de données (20).

5. Procédé selon l'une quelconque des revendications précédentes, présentant en outre
la production dynamique de connecteurs (14).

6. Procédé selon l'une quelconque des revendications précédentes, **caractérisé en ce que**
le dispositif de stockage de données (20) est réalisé, en réponse au fichier de description, pour alimenter au moins certains des modules de programme (11, 12, 13) en méta-information (21-31), de telle sorte qu'ils peuvent être exécutés dans différents processus gérés par le système d'exploitation en temps réel.

7. Procédé selon l'une quelconque des revendications précédentes, présentant en outre
la conversion des variables d'un premier type de données en un deuxième type de données par le connecteur (14) .

8. Procédé selon l'une quelconque des revendications précédentes, présentant en outre
la réalisation d'une opération fonctionnelle avec le connecteur (14).

9. Procédé selon l'une quelconque des revendications précédentes, présentant en outre
l'extension du dispositif de stockage de données (20) par un module de programme (11, 12, 13) supplémentaire, sans qu'un redémarrage d'un système de commande soit réalisé.

10. Procédé selon l'une quelconque des revendications précédentes, présentant en outre
la fourniture d'une valeur de remplacement par le connecteur (14) au cas où aucune actualisation d'une variable publiée ne s'effectuerait pendant un intervalle de temps défini.

11. Procédé selon l'une quelconque des revendications précédentes, présentant en outre
la configuration du dispositif de stockage de données (20) avec le fichier de description par définition d'un port, d'un type de données pour le port et d'un sens de données du port.

12. Dispositif de stockage de données (20) pour l'échange de données entre des modules de programme (11, 12, 13) dans un système d'exploitation en temps réel, où les modules de programme (11, 12, 13) peuvent être exécutés par le système d'exploitation en temps réel sur un appareil de commande dans une installation d'automatisation en tant que partie d'une application globale à exécuter sur l'appareil de commande, où le dispositif de stockage de données présente un composant logiciel et une mémoire, où le composant logiciel forme une partie du micrologiciel de l'appareil de commande, et où le dispositif de stockage de données fournit un espace de données mondiales, dans lequel les modules de programme peuvent déposer des valeurs de variable, de sorte que d'autres modules de programme peuvent accéder à celles-ci, et où le dispositif de stockage de données peut être configuré avec un fichier de description, où le fichier de description présente une méta-information, qui décrit quelle variables un module de programme offre à l'aide de ports, et où la méta-information du fichier de description est stockée dans le dispositif de stockage de données, où la méta-information (21-31) stockée présente au moins une variable, et où le dispositif de stockage de données est réalisé pour fournir au moins un connecteur (14), où le connecteur indique une fonctionnalité du dispositif de stockage de données, qui fournit une liaison d'un des modules de programme à un autre des modules de programme par l'intermédiaire du dispositif de stockage de données, où le connecteur décrit de quelle façon les données de la variable sont écrites et lues dans une mémoire du dispositif de stockage de données, de sorte qu'une liaison peut être établie entre les modules de programme (11, 12, 13) par l'intermédiaire du dispositif de stockage de données (20), et où
le dispositif de stockage de données est réalisé pour l'échange des variables entre un des modules de programme (11, 12, 13) et le dispositif de stockage de données (20) par l'intermédiaire du connecteur (14), et où
le dispositif de stockage de données est réalisé en outre
pour publier les variables fournies par un premier module de programme des modules de programme (11, 12, 13) dans le dispositif de stockage de données (20) pour au moins un deuxième module de programme des modules de programme (11, 12, 13), de sorte qu'il est possible d'accéder aux variables dans le dispositif de stockage de données (20) par au moins le deuxième module de programme.

13. Dispositif de stockage de données (20) selon la revendication 12, où le dispositif de stockage de données (20) est réalisé pour l'échange de données entre des modules de programme (11, 12, 13) de différents langages de programmation.

14. Dispositif de stockage de données (20) selon l'une quelconque des revendications 12 ou 13, présentant une zone d'échange dans la mémoire, dans laquelle des données peuvent être écrites et des données lues, où le dispositif de stockage de données est réalisé pour que les modules de programme (11, 12, 13) puissent accéder au dispositif de stockage de données (20) par l'intermédiaire d'interfaces de programmation.

15. Appareil (10) pour l'échange de données entre des modules de programme (11, 12, 13) dans un système d'exploitation en temps réel présentant
un dispositif de stockage de données (20) selon l'une quelconque des revendications 12 à 14 ;
au moins un processeur (32), et
au moins une interface (33) par rapport à un dispositif d'automatisation.

16. Appareil (10) selon la revendication 15, où l'appareil est réalisé pour l'échange de données entre des modules de programme (11, 12, 13) de différents langages de programmation.
